# EUROPÄISCHE PATENTANMELDUNG

(11) **EP 4 269 218 A1**
(43) Veröffentlichungstag der Anmeldung: **01.11.2023**
(21) Anmeldenummer: 23155797.6
(22) Anmeldetag: 09.02.2023
(51) Int. Cl.: B62D 55/02, B62D 11/22, B62D 55/10, B62D 55/12, B62D 55/14, B62D 55/24, B62D 55/30

(54) **RAUPENLAUFWERK FÜR EINE LANDWIRTSCHAFTLICHE ARBEITSMASCHINE**

(30) Priorität: 25.04.2022 DE 102022109886
(71) Anmelder: CLAAS Industrietechnik GmbH, 33106 Paderborn (DE)
(72) Erfinder: Rackow, Sascha, 33098 Paderborn (DE); Leimeier, Markus, 59555 Lippstadt (DE); Weingärtner, Felix, 32052 Herford (DE)
(74) Vertreter: CLAAS Gruppe

(57) **Zusammenfassung**

Die vorliegende Anmeldung betrifft ein Raupenlaufwerk (1) für eine landwirtschaftliche Arbeitsmaschine (2), umfassend zwei in Längsrichtung (3) des Raupenlaufwerks (1) hintereinander sowie einander gegenüberliegende Haupträder (4, 5), mindestens ein die Haupträder (4, 5) umspannendes, endloses Raupenband (6), einen Verstellmechanismus (7) zur Einstellung einer Spur des Raupenbandes (6), wobei mindestens ein erstes Hauptrad (4) als Antriebsrad ausgebildet ist und derart mit dem Raupenband (6) zusammenwirkt, dass ein auf erste Hauptrad (4) übertragenes Drehmoment auf das Raupenband (6) übertragbar und das Raupenband (6) auf diese Weise um die Haupträder (4, 5) umlaufend antreibbar ist, wobei der Verstellmechanismus (7) derart mit dem zweiten Hauptrad (5) zusammenwirkt, dass eine Winkelstellung des zweiten Hauptrads (5) bezogen eine vertikale Spurstellachse (8) veränderbar ist.

Um ein Raupenlaufwerk hervorzubringen, bei dem die Spur des Raupenbandes möglichst einfach einstellbar ist, wird erfindungsgemäß vorgeschlagen, dass der Verstellmechanismus (7) mindestens ein Betätigungsmittel (9, 10) umfasst, mittels dessen mittelbar oder unmittelbar die Winkelstellung des zweiten Hauptrads (5) veränderbar ist, wobei das Betätigungsmittel (9) derart angeordnet ist, dass es von einer Längsseite des Raupenlaufwerks (1) betätigbar ist.

## Beschreibung

Die vorliegende Anmeldung betrifft ein Raupenlaufwerk für eine landwirtschaftliche Arbeitsmaschine gemäß dem Oberbegriff von Anspruch 1.

Landwirtschaftlicher Arbeitsmaschinen, die Raupenlaufwerke verwenden, sind bereits seit geraumer Zeit bekannt. Raupenlaufwerke haben gegenüber normalen Rundrädern den Vorteil, dass sie eine größere Aufstandsfläche aufweisen und mithin eine Flächenpressung des Untergrundes geringer ist. Dies kann insbesondere bei besonders schweren Arbeitsmaschinen von Vorteil sein, insbesondere bei Feldhäckslern oder Mähdreschern.

Das Raupenlaufwerk umfasst zwei Haupträder, die in Längsrichtung des Raupenlaufwerks betrachtet hintereinander sowie einander gegenüberliegend angeordnet sind. "Einander gegenüberliegend" bedeutet in diesem Zusammenhang, dass die Haupträder typischerweise jeweils ein in Längsrichtung des Raupenlaufwerks betrachtetes Ende desselben darstellen. Somit sind typischerweise ein vorderes Hauptrad an einem vorderen Ende des Raupenlaufwerks und ein hinteres Hauptrad an einem hinteren Ende des Raupenlaufwerks angeordnet.

Das Raupenlaufwerk umfasst weiterhin mindestens ein Raupenband, dass die Haupträder umspannt und als endloses Band ausgeführt ist. Zumindest ein erstes der beiden Haupträder ist als Antriebsrad ausgebildet und wirkt derart mit dem Raupenband zusammen, dass ein auf das jeweilige Hauptrad übertragenes Drehmoment auf das Raupenband übertragbar ist. Auf diese Weise ist das endlose Raupenband um die Haupträder umlaufend antreibbar. Hierdurch ist das Raupenlaufwerk insgesamt geeignet, für einen Vortrieb der jeweiligen Arbeitsmaschine, an der das Raupenlaufwerk montiert ist, zu sorgen. Das Drehmoment, das auf das jeweilige Hauptrad wirkt, wird typischerweise von einer Verbrennungskraftmaschine der jeweiligen Arbeitsmaschine bereitgestellt.

Weiterhin umfasst das Raupenlaufwerk einen Verstellmechanismus, der zur Einstellung einer Spur des Raupenbandes geeignet ist. Der Verstellmechanismus wirkt mit dem zweiten Hauptrad zusammen, das typischerweise nicht als Antriebsrad ausgebildet ist. Der Verstellmechanismus ist dazu eingerichtet, eine Winkelstellung dieses zweiten Hauptrads bezogen auf eine vertikale Spurstellachse zu verändern. Das Ziel dieser Veränderung besteht typischerweise darin, dass die beiden Haupträder derart parallel zueinander ausgerichtet sind, dass das Raupenband zentriert auf den beiden Haupträdern geführt ist.

Raupenlaufwerke der vorstehend beschriebenen Art sind im Stand der Technik bereits bekannt. Hierzu wird beispielhaft auf die internationale Patentanmeldung WO 2021/163315 A1 hingewiesen. Diese Anmeldung beschreibt ein Raupenlaufwerk, das beispielsweise mit einem Traktor zusammenwirken kann. Um die Dauerhaftigkeit des Raupenlaufwerks zu verbessern, wird ein Verstellmechanismus vorgeschlagen, mittels dessen die Spur des Raupenbandes eingestellt werden kann, über das das Raupenlaufwerk verfügt. Hierzu ist vorgesehen, dass eines der Haupträder des Raupenlaufwerks um eine vertikale Spurstellachse verschwenkt wird.

Das Einstellen der Spur des Raupenbandes hat sich in der Praxis als sehr aufwendig herausgestellt. Insbesondere wird eine Beurteilung dessen, ob die Spur des Raupenbandes in zufriedenstellender Weise eingestellt ist, daran bemessen, wie stark das Raupenband im Betrieb des Raupenlaufwerks seitlich geführt werden muss, um die gewünschte mittige bzw. zentrierte Position bezogen auf die Haupträder zu behalten. Die seitliche Führung des Raupenbandes verursachte Reibung und trägt mithin zu einem Verschleiß des Raupenbandes sowie zu einem unnötigen Verbrauch von Energie bei. Für die Einstellung des Raupenbandes ist es bekannt, mittels des Verstellmechanismus die Winkelstellung eines der Haupträder bezogen auf die Spurstellachse zu verändern und sodann im Wege einer Testfahrt zu ermitteln, in welchem Umfang das Raupenband seitlich geführt werden muss, das heißt die beschriebene Reibung auftritt. Hierzu ist es typischerweise erforderlich, eine längere Teststrecke zu fahren, um eine belastbare Aussage treffen zu können. Die Einstellung der Spur des Raupenbandes erfolgt hierbei iterativ, sodass bei Feststellung einer noch nicht zufriedenstellenden Einstellung der Spur die Winkelstellung des zweiten Hauptrads um die Spurstellachse verändert wird, woraufhin eine weitere Testfahrt ausgeführt wird. Dieser Ablauf wird so lange fortgesetzt, bis ein gewünschtes Ergebnis erreicht ist.

Der vorliegenden Anmeldung liegt mithin die Aufgabe zugrunde, ein Raupenlaufwerk hervorzubringen, bei dem die Spur des Raupenbandes möglichst einfach einstellbar ist.

Die zugrunde liegende Aufgabe wird erfindungsgemäß mittels eines Raupenlaufwerks mit den Merkmalen des Anspruchs 1 gelöst. Vorteilhafte Ausgestaltungen ergeben sich aus den zugehörigen Unteransprüchen.

Das erfindungsgemäße Raupenlaufwerk ist dadurch gekennzeichnet, dass der Verstellmechanismus mindestens ein Betätigungsmittel umfasst, mittels dessen mittelbar oder unmittelbar die Winkelstellung des zweiten Hauptrads veränderbar ist. Hierbei ist das Betätigungsmittel derart angeordnet, dass es von einer Längsseite des Raupenlaufwerks aus betätigbar ist. Als "Längsseite" des Raupenlaufwerks wird im Sinne der vorliegenden Anmeldung eine Seite des Raupenlaufwerks verstanden, die sich seitlich neben dem Raupenlaufwerk in einem Abstand senkrecht zu der Längsrichtung des Raupenlaufwerks befindet. In einem montierten Zustand, in dem das Raupenlaufwerk an einer Arbeitsmaschine montiert ist, ist die Längsseite des Raupenlaufwerks, von der aus das mindestens eine Betätigungsmittel betätigbar ist, die Seite des Raupenlaufwerks, die der Arbeitsmaschine abgewandt ist. Auf diese Weise kann das Betätigungsmittel besonders einfach betätigt werden.

Das erfindungsgemäße Raupenlaufwerk hat viele Vorteile. Insbesondere ermöglicht es einen einfachen und zügigen Zugriff auf den Verstellmechanismus, wobei insbesondere ein Zugriff von beiden Längsseiten des Raupenlaufwerks auf ein jeweiliges Betätigungsmittel nicht erforderlich ist. Stattdessen kann der Verstellmechanismus von einer Längsseite des Raupenlaufwerks aus betätigt werden. Auf diese Weise kann die Winkelstellung des zweiten Hauptrads bezogen auf die Spurstellachse besonders einfach verändert werden, wodurch sich ein verbesserter Bedienungskomfort für den Verstellmechanismus und mithin das Raupenlaufwerk insgesamt ergibt. Die Einstellung der Spur des Raupenbandes ist auf diese Weise gegenüber dem Stand der Technik vereinfacht.

In besonders bevorzugter Ausgestaltung umfasst der Verstellmechanismus ein Übersetzungselement, mittels dessen eine lineare Bewegung des mindestens einen Betätigungsmittels in eine Schwenkbewegung des zweiten Hauptrads, bevorzugt um die Spurstellachse, übersetzbar ist. Das Übersetzungselement wirkt insoweit wie ein Getriebe, mittels dessen eine lineare Bewegung in eine Drehbewegung übersetzt wird. Letztere ist gewünscht, um die Spur des Raupenbandes zu verändern. Eine lineare Bewegung ist besonders gut geeignet, um eine - insbesondere manuelle - Betätigung des Betätigungsmittels vorzunehmen. Somit kann es sich bei dem mindestens einen Betätigungsmittel insbesondere um einen Gewindebolzen handeln, der mittels eines entsprechenden Werkzeugs besonders einfach manuell betätigt werden kann. Eine entsprechende Ausgestaltung ist nachstehend gesondert erläutert.

Sofern ein beschriebenes Übersetzungselement vorhanden ist, kann es weiterhin von Vorteil ein, wenn eine Nabe des zweiten Hauptrads mittelbar oder unmittelbar an dem Übersetzungselement gelagert ist. Diese Ausgestaltung hat den Vorteil, dass auf eine weitere Übersetzung verzichtet werden kann. Insbesondere kann das Übersetzungselement als solches um die Spurstellachse oder eine hierzu parallele Achse schwenkbar gelagert sein, wobei die Nabe des zweiten Hauptrads infolge der Schwenkbewegung des Übersetzungselements gleichermaßen um die Spurstellachse verschwenkt wird. Letzteres hat effektiv die Veränderung der Spur des Raupenbandes zur Folge. Insbesondere kann das mindestens eine Betätigungsmittel in einem senkrecht zu der Spurstellachse gemessenen Abstand von der Spurstellachse angeordnet sein und mit dem Übersetzungselement zusammenwirken, sodass eine lineare Bewegung des Betätigungsmittels, bevorzugt in eine tangentiale Richtung bezogen auf die Spurstellachse, infolge des Abstandes zu der Spurstellachse eine entsprechende Schwenkbewegung des Übersetzungselements und mithin der Nabe des zweiten Hauptrads um die Spurstellachse bewirkt.

In besonders vorteilhafter Weiterbildung ist die Nabe an einer Schwinge ausgebildet, die an dem Übersetzungselement gelagert ist. Hierbei sind die Schwinge und das Übersetzungselement unter Ausbildung einer Spannachse miteinander gekoppelt, sodass die Schwinge um die Spannachse relativ zu dem Übersetzungselement verschwenkbar ist. Die Spannachse ist hierbei senkrecht zu der Spurstellachse sowie parallel zu einer Nabenachse der Nabe orientiert. Ferner ist die Spannachse in einem Abstand zu der Nabenachse angeordnet. Das zweite Hauptrad ist in dieser Ausgestaltung mittelbar über die Schwinge an dem Übersetzungselement gelagert. Die beschriebene Ausgestaltung hat den Vorteil, dass das zweite Hauptrad besonders einfach dazu verwendet werden kann, das Raupenband zu spannen. Hierzu kann es insbesondere mit einer Spanneinrichtung zusammenwirken, die dazu geeignet ist, eine Kraft auf die Schwinge auszuüben, sodass diese um die Spannachse relativ zu dem Übersetzungselement verschwenkt wird. Da sich die Nabenachse in einem Abstand von der Spannachse befindet, wird im Zuge dieser Verschwenkung die Nabenachse auf einem Kreisbogen um die Spannachse bewegt, wodurch sich ein Abstand zwischen der Nabenachse des zweiten Hauptrades und einer Nabenachse des ersten Hauptrades verändert. Auf diese Weise kann wie gewünscht eine Spannung des Raupenbandes verändert werden, das die beiden Haupträder umspannt.

Die Spanneinrichtung kann insbesondere von einem Bandspannzylinder gebildet sein, mittels dessen eine Spannkraft auf die Schwinge ausgeübt werden kann. Der Bandspannzylinder umfasst vorteilhafter Weise einen Zylinder, in dem ein Kolben längsbeweglich gelagert ist. Der Bandspannzylinder ist bevorzugt hydraulisch betreibbar, wobei er insbesondere mit einem Hydrauliksystem der jeweiligen Arbeitsmaschine verbindbar sein kann, an der das Raupenlaufwerk montiert ist. Der Bandspannzylinder ist dazu geeignet, die Spannkraft entgegen einer von dem Raupenband ausgeübten Gegenkraft aufzubringen und auf diese Weise die Schwinge um die Spannachse zu verschwenken. Aufgrund der elastischen Eigenschaften des Raupenbandes wird die Gegenkraft des Raupenbandes mit zunehmender Verschwenkung der Schwinge und mithin zunehmendem Abstand der Nabenachse des zweiten Hauptrades von der Nabenachse des ersten Hauptrades größer. Wenn diese Gegenkraft, die mit der Spannung des Raupenbandes korrespondiert, einen gewünschten Wert erreicht hat, kann der Betrieb des Bandspannzylinders eingestellt werden, woraufhin das Raupenband gespannt ist.

In einer besonders vorteilhaften Ausgestaltung des erfindungsgemäßen Raupenbands umfasst der Verstellmechanismus mindestens zwei Betätigungsmittel, vorzugsweise genau zwei Betätigungsmittel. Hierbei sind vorzugsweise sämtliche Betätigungsmittel von derselben Längsseite des Raupenlaufwerks aus betätigbar. Mit anderen Worten sind die Betätigungsmittel derart angeordnet, dass sie von einer Längsseite des Raupenlaufwerks aus betätigt werden können. Die Verwendung von zwei Betätigungsmitteln hat den Vorteil, dass ein jeweiliges Gegenstück, auf das die Betätigungsmittel wirken, in beide Richtungen entlang zueinander paralleler Achsen festgelegt werden kann. Hierbei begrenzt das eine Betätigungsmittel eine Bewegung des jeweiligen Gegenstücks entlang einer ersten Richtung entlang einer ersten Wirkungsachse des jeweiligen Betätigungsmittels, während das andere Betätigungsmittel die andere Richtung entlang einer parallel zu der ersten Wirkungsachse angeordneten zweiten Wirkungsachse begrenzt. Die beiden Wirkungsachse können deckungsgleich ausgebildet sein.

Sofern der Verstellmechanismus ein Übersetzungselement umfasst, kann es weiterhin besonders vorteilhaft sein, wenn die Betätigungsmittel jeweils einen Gewindebolzen umfassen, die jeweils ein Außengewinde aufweisen. Diese Außengewinde korrespondieren mit entsprechenden innengewinnenden des Übersetzungselements. Auf diese Weise ist ein Formschluss zwischen den Betätigungsmitteln und dem Übersetzungselement hergestellt, der dazu geeignet ist, eine Betätigung mindestens eines der Betätigungsmittel, vorzugsweise beider Betätigungsmittel, in eine Veränderung einer Winkelstellung des Übersetzungselements und mithin des zweiten Hauptrades zu übertragen. Insbesondere kann eine Rotation der Betätigungsmittel eine Bewegung des Übersetzungselements bewirken, indem die Außengewinde der Betätigungsmittel und die Innengewinde des Übersetzungselements miteinander kämmen und auf diese Weise das Übersetzungselement nach Art eines Gewindeantriebs antreibt. Insbesondere kann das Übersetzungselement hierdurch tangential zu der Spurstellachse bewegt werden, woraus sich eine Verschwenkung des Übersetzungselements um die Spurstellachse ergibt.

Sofern der Verstellmechanismus mehrere Betätigungsmittel sowie das Übersetzungselement umfasst, kann es weiterhin besonders vorteilhaft sein, wenn an einem feststehenden Rahmenteil des Raupenlaufwerks für die Betätigungsmittel jeweils ein Gegenlager ausgebildet ist. Diese sind dazu eingerichtet, dass die Betätigungsmittel gegen die Gegenlager verspannbar und hierdurch - aufgrund der Verbindung der Betätigungsmittel mit dem Übersetzungselement - das Übersetzungselement in einander entgegengesetzte Richtungen tangential zu der Spurstellachse arretierbar ist. Mit anderen Worten kann das Übersetzungselement mittels Betätigung der Betätigungsmittel bewegt werden, wobei es infolge einer linearen Bewegung der Betätigungsmittel eine Schwenkbewegung um die Spurstellachse ausführt, die in einem senkrecht zu der Spurstellachse gemessenen Abstand zur Wirkungsachse der Betätigungsmittel angeordnet ist. Bevorzugt sind die Wirkungsachsen der Betätigungsmittel jeweils in einer, gegebenenfalls in derselben, Orthogonalebene zu der Spurstellachse angeordnet. Um die Betätigungsmittel und mit ihnen das Übersetzungselement relativ zu der Spurstellachse zu arretieren, kommen die beschriebenen Gegenlager zum Einsatz. Ein erstes Gegenlager verhindert hierbei eine Bewegung des Übersetzungselements in eine erste Richtung tangential zu der Spurstellachse und das zweite Gegenlager eine Bewegung in die entgegengesetzte Richtung tangential zu der Spurstellachse.

In bevorzugter Weise weist das Rahmenteil hierfür zwei gegenüberliegende Wangen auf, zwischen denen sich ein Betätigungsabschnitt des Übersetzungselements befindet. Das erste Gegenlager ist an einer ersten Wange ausgebildet, die der Längsseite des Raupenlaufwerks zugeordnet ist, von der aus die Betätigungsmittel betätigbar sind. Das zweite Gegenlager ist an der zweiten Wange ausgebildet. Hierbei erstreckt sich bevorzugt das Betätigungsmittel, das mit dem zweiten Gegenlager der zweiten Wange zusammenwirkt, ausgehend von der Längsseite des Raupenlaufwerks, von dem aus die Betätigungsmittel betätigbar sind, durch die erste Wange sowie durch den Betätigungsabschnitt des Übersetzungselements hindurch zu der zweiten Wange. Bevorzugt erstreckt sich das Betätigungsmittel durch die zweite Wange hindurch, wobei das Gegenlager, das mit dem Betätigungsmittel zusammenwirkt, auf der dem Betätigungsabschnitt abgewandten Seite der zweiten Wange ausgebildet ist. Das erste Gegenlager ist entsprechend bevorzugt an der ersten Wange ausgebildet, wobei es vorzugsweise an einer dem Betätigungsabschnitt des Übersetzungselements abgewandten Seite der ersten Wange ausgebildet ist.

Das erfindungsgemäße Raupenlaufwerk weiter ausgestaltend umfasst selbiges eine Einstelleinrichtung, die mit dem Verstellmechanismus zusammenwirkt. Die Einstelleinrichtung ist dazu eingerichtet, den Verstellmechanismus automatisch zu betreiben, sodass die Spur des Raupenbandes korrigiert wird. Insbesondere kann die Einstelleinrichtung über mindestens einen Aktor sowie eine Steuerung zur automatischen Ansteuerung des Aktors verfügen. Der Aktor wirkt hierbei bevorzugt derart mit dem Verstellmechanismus zusammen, dass mittels des Aktors das mindestens eine Betätigungsmittel betätigbar ist. Sofern der Verstellmechanismus eine Mehrzahl von Betätigungsmitteln aufweist, ist es denkbar, dass ein Aktor mit mehreren Betätigungsmitteln zusammenwirkt oder jedem Betätigungsmittel ein eigener Aktor zugeordnet ist. Falls mehrere Aktoren vorhanden sind, sind bevorzugt sämtlicher Aktoren mittels der Steuerung ansteuerbar. Die Steuerung ist dazu geeignet, Informationen zu verarbeiten und hierdurch Steuerbefehle zu erzeugen, die an den mindestens einen Aktor gesendet werden. Auf diese Weise ist der Aktor und mithin der Verstellmechanismus in Abhängigkeit von Informationen ansteuerbar, die der Steuerung zugeleitet und mittels selbiger verarbeitet werden.

Der Aktor kann beispielsweise von einem Elektromotor gebildet sein, mittels dessen ein Drehmoment erzeugbar ist. Bei einer Zusammenwirkung des Aktors mit einem Betätigungsmittel kann das Betätigungsmittel beispielsweise drehangetrieben werden, wodurch sich beispielsweise das Betätigungsmittel in seine axiale Richtung verlagert. Dies kann beispielsweise der Fall sein, wenn das Betätigungsmittel einen Gewindebolzen umfasst, der nach Art eines Spindelantriebs betrieben wird. Zur Übersetzung einer Drehbewegung des Aktors auf eine Bewegung des jeweiligen Betätigungsmittels kann die Einstelleinrichtung ferner über mindestens ein Getriebe verfügen.

Bevorzugt umfasst das Raupenlaufwerk hierfür mindestens eine Sensoreinrichtung, die in Daten übertragender Weise mit der Steuerung verbunden ist. Die Sensoreinrichtung ist dazu geeignet, Informationen zu erfassen, insbesondere mindestens einen Umweltparameter und/oder mindestens einen Betriebsparameter des Raupenlaufwerks. Die erfassten Informationen sind an die Steuerung leitbar und in der beschriebenen Weise mittels der Steuerung verarbeitbar. Insbesondere kann die Sensoreinrichtung mindestens einen Temperatursensor umfassen, mittels dessen eine Temperatur an einer Führungsstelle erfassbar ist, an der das Raupenband seitlich geführt ist. Insbesondere kann der Temperatursensor dazu eingerichtet sein, die Temperatur eines Führungselements zu erfassen, mittels dessen das Raupenband geführt ist. Alternativ kann unmittelbar eine Temperatur zumindest einer Stelle des Raupenbandes überwacht werden, bevorzugt an einer Flanke eines Führungsblocks, mittels dessen das Raupenband mit mindestens einem Führungselement zusammenwirkt und hierdurch in seiner Spur geführt ist.

Sofern die Spur des Raupenbandes nicht korrekt eingestellt ist, wird das Raupenband mit mindestens einem Führungselement in reibenden Kontakt treten, wobei das Führungselement dafür sorgt, dass das Raupenband auch bei Vorliegen einer nicht korrekt eingestellten Spur nicht von dem jeweiligen Hauptrad "abläuft". Infolge des reibenden Kontakts kommt es zu einer Temperaturentwicklung sowohl an einem Führungselement als auch an dem Raupenband. Ein hierdurch bedingter Anstieg der Temperatur kann mittels des Temperatursensors der Sensoreinrichtung erfasst werden. Die entsprechende Information wird an die Steuerung geleitet, die daraufhin den mindestens einen Aktor ansteuert, der wiederum das mindestens eine Betätigungsmittel des Verstellmechanismus betätigt. Dies erfolgt in der Art, dass die Spur des Raupenbandes derart korrigiert wird, dass die Reibung zwischen dem Raupenband und dem Führungselement vermindert wird. Diese Veränderung ist sodann wiederum mittels des Temperatursensors erfassbar. Mithin ergibt sich ein Regelkreis, mittels dessen die Spur des Raupenbandes automatisch iterativ korrigiert wird, bis die infolge der Reibung auftretenden Temperaturen einen vorgegebenen Grenzwert erreichen oder unterschreiben.

Ein so ausgestattetes Raupenlaufwerk ist besonders effizient einstellbar, insbesondere wenn die Korrektur der Spur des Raupenbandes unter Verwendung des Verstellmechanismus sowie der Einstelleinrichtung während eines Betriebs des Raupenlaufwerks erfolgt. Somit ist es denkbar, dass die jeweilige Arbeitsmaschine, an der das Raupenlaufwerk montiert ist, für eine gewisse Einstellzeit betrieben wird, beispielsweise 20 Minuten. Während dieser Einstellzeit wird der beschriebene Regelkreis betrieben, wobei mittels des Verstellmechanismus das zweite Hauptrad mittelbar oder unmittelbar um die Spurstellachse verschwenkt wird. Dies erfolgt automatisch während des Betriebs der Arbeitsmaschine, sodass insbesondere ein wiederholtes Anhalten, Absteigen und händisches Nachstellen der Spur des Raupenbandes, wie es aus dem Stand der Technik bekannt ist, entfällt.

Bevorzugt umfasst die Sensoreinrichtung mindestens zwei Temperatursensoren, von denen jeweils einer einem Führungselement zugeordnet ist, die gemeinsam ein Führungselementpaar bilden. Die Führungselemente sind dazu geeignet, das Raupenband beidseitig an einer Führungsstelle zu führen.

Die Erfindung ist nachstehend anhand eines Ausführungsbeispiels, das in den Figuren dargestellt ist, näher erläutert. Es zeigt:
- Fig. 1:: Einen Querschnitt durch eine Arbeitsmaschine, die mit einem erfindungsgemäßen Raupenlaufwerk ausgestattet ist,
- Fig. 2:: Eine Draufsicht auf das Raupenlaufwerk gemäß Figur 1,
- Fig. 3:: Die Draufsicht gemäß Figur 2, wobei ein Hauptrad um eine Spurstellachse verschwenkt ist,
- Fig. 4:: Eine perspektivische Ansicht des Raupenlaufwerks gemäß Figur 2,
- Fig. 5:: Ein Detail eines Verstellmechanismus des Raupenlaufwerks gemäß Figur 2,
- Fig. 6:: Ein weiteres Detail des Verstellmechanismus gemäß Figur 5,
- Fig. 7:: Ein Detail eines Betätigungsabschnitts eines Übersetzungselements des Verstellmechanismus gemäß Figur 6,
- Fig. 8:: Ein weiteres Detail des Betätigungsabschnitts gemäß Figur 7,
- Fig. 9:: Ein Querschnitt durch ein Raupenband an einer Führungsstelle.

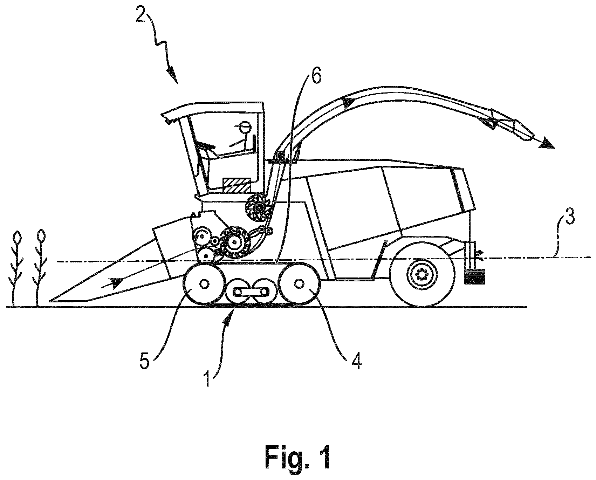

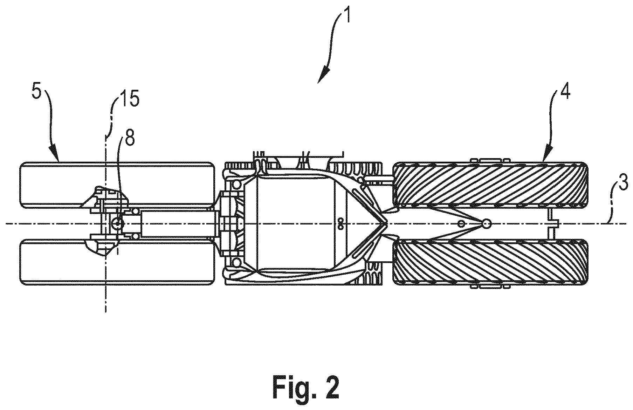

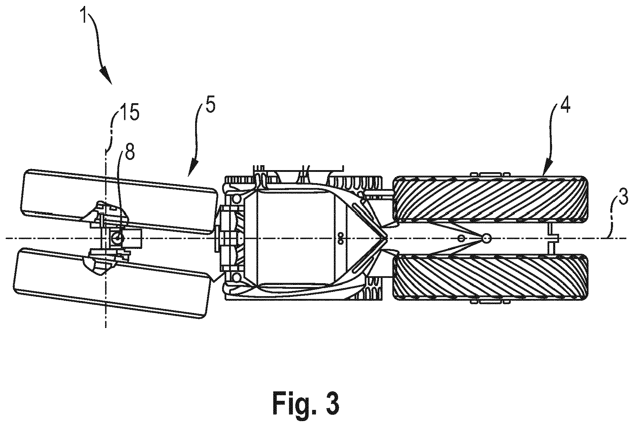

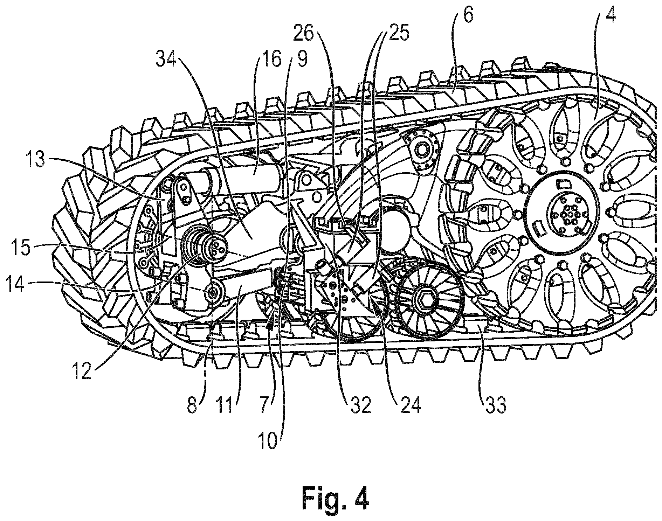

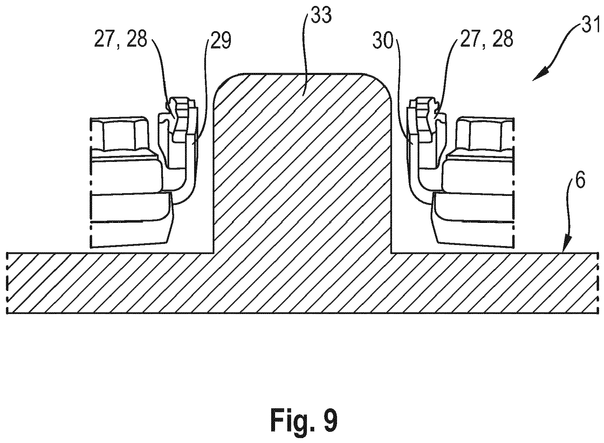

Ein Ausführungsbeispiel, das in den **Figuren 1 bis 9** gezeigt ist, betrifft ein erfindungsgemäßes Raupenlaufwerk 1, das in dem gezeigten Beispiel an einer Arbeitsmaschine **2** montiert ist, die von einem selbstfahrenden Feldhäcksler gebildet ist. Dies ergibt sich besonders gut anhand von **Figur 1**.

Das Raupenlaufwerk **1** umfasst ein erstes Hauptrad **4** sowie ein zweites Hauptrad **5,** das in Längsrichtung **3** des Raupenlaufwerks **1** betrachtet gegenüberliegend zu dem ersten Hauptrad **4** angeordnet ist. Die beiden Haupträder **4, 5** sind mit einem Raupenband **6** umspannt. Um das Raupenband **6** anzutreiben, ist das erste Hauptrad **4** drehantreibbar ausgebildet. Hierzu wirkt das Hauptrad **4** mit einer in den Figuren nicht dargestellten Verbrennungskraftmaschine der Arbeitsmaschine **2** zusammen, mittels der ein Abtriebsmoment bereitgestellt wird, das auf das erste Hauptrad **4** übertragen wird. Auf diese Weise kann das Raupenband **6** um die beiden Haupträder **4, 5** umlaufend angetrieben werden, sodass eine Beschleunigung der Arbeitsmaschine 2 bewirkt wird.

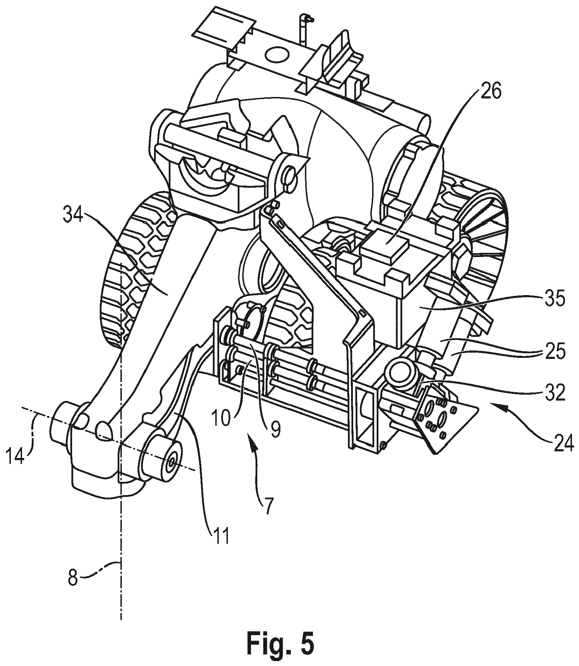

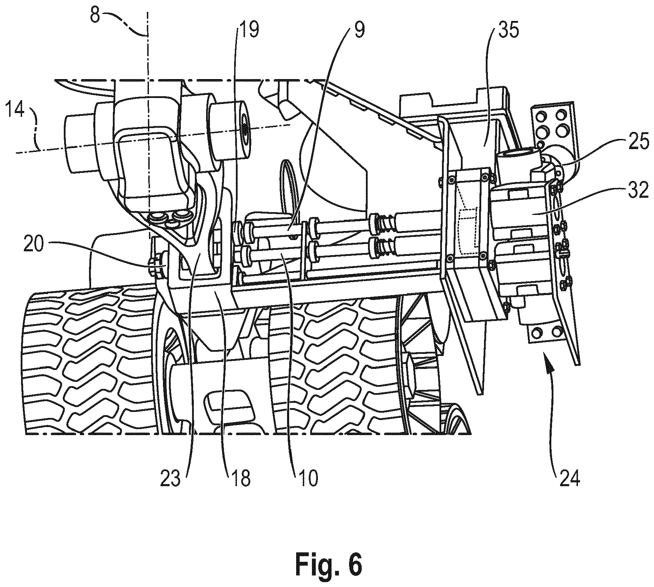

Um eine Spur des Raupenbandes **6** zu korrigieren, ist das zweite Hauptrad **5** um eine Spurstellachse **8** verschwenkbar ausgebildet. Die Spurstellachse **8** ist vertikal orientiert und erstreckt sich mithin senkrecht zu der Längsrichtung **3** des Raupenlaufwerks **1.** Um das zweite Hauptrad **5** um die Spurstellachse **8** zu verschwenken, umfasst das Raupenlaufwerk **1** einen Verstellmechanismus **7.** Dieser umfasst in dem gezeigten Beispiel zwei Betätigungsmittel **9, 10,** die mit einem Übersetzungselement **11** zusammenwirken. Letzteres ist verschwenkbar an einem Tragelement **34** des Raupenlaufwerks **1** gelagert, wobei das Tragelement **34** und das Übersetzungselement **11** um die Spurstellachse **8** relativ zueinander verschwenkbar sind. Die Betätigungsmittel **9, 10** wirken mit einem Betätigungsabschnitt **23** des Übersetzungselements **11** zusammen, der in einem senkrecht zu der Spurstellachse **8** gemessenen Abstand zu letzterer angeordnet ist. Insbesondere sind die Betätigungsmittel **9, 10** in dem gezeigten Beispiel zumindest im Wesentlichen tangential zu der Spurstellachse **8** orientiert, sodass eine lineare Bewegung zumindest eines Teils des jeweiligen Betätigungsmittels **9, 10** eine Schwenkbewegung des Übersetzungselements **11** um die Spurstellachse **8** auslöst. Dies ergibt sich besonders gut anhand der **Figuren 5** **und** **6****.**

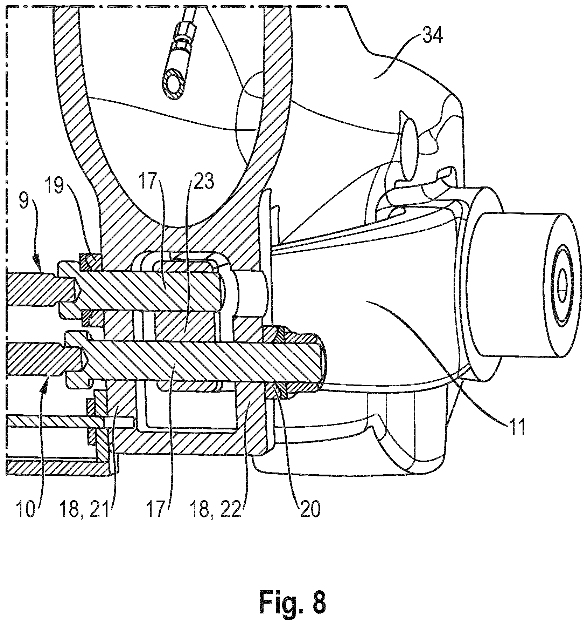

In dem gezeigten Beispiel umfassen die Betätigungsmittel **9, 10** jeweils einen Gewindebolzen **17,** der ein Außengewinde umfasst. Mittels dieser Gewindebolzen **17** kämmen die Betätigungsmittel **9, 10** mit komplementären Innengewinde, die in dem Betätigungsabschnitt **23** des Übersetzungselements **11** ausgebildet sind. Dies ergibt sich besonders gut anhand von **Figur 8**. diese Ausgestaltung erlaubt es, dass eine rotatorische Bewegung der Betätigungsmittel **9, 10** in eine lineare Bewegung des Übersetzungselements **11** im Bereich des Betätigungsabschnitt **23** überführt wird, woraus wiederum aufgrund des Abstandes des Betätigungsabschnitts **23** von der Spurstellachse **8** eine rotatorische Bewegung des Übersetzungselements **11** insgesamt um die Spurstellachse **8** erfolgt.

An dem Übersetzungselement **11** ist eine Schwinge **13** gelagert, die um eine Spannachse **14** relativ zu dem Übersetzungselement **11** verschwenkbar ist. Die Spannachse **14** ist senkrecht zu der Spurstellachse **8** angeordnet. Ferner erstreckt sich die Spannachse **14** parallel zu einer Nabenachse **15** zweier Naben **12,** die gleichermaßen an der Schwinge **13** ausgebildet sind. An jeder der Naben **12** ist eine Radscheibe des zweiten Hauptrades **5** gelagert, wobei die beiden Naben **12** koaxial zueinander sowie einander gegenüberliegend an der Schwinge **13** angeordnet sind. Die Spannachse **14** und die Nabenachse sind beabstandet voneinander angeordnet, sodass eine Verschwenkung der Schwinge **13** um die Spannachse **14** zu einer Verlagerung der Nabenachse **15** auf einem Kreisbogen um die Spannachse **14** führt.

Die Schwinge **13** wirkt ferner mit einem Bandspannzylinder **16** zusammen, mittels dessen eine Spannkraft auf die Schwinge **13** ausgeübt werden kann. Eine Wirkungsachse des Bandspannzylinders **16** ist beabstandet von der Spannachse **14** angeordnet, sodass die Schwinge **13** infolge eines Antriebsmittels des Bandspannzylinder **16** um die Spannachse **14** verschwenkbar ist. Der Bandspannzylinder **16** ist hier von einem Hydraulikzylinder gebildet. Die Verschwenkung der Schwinge **13** um die Spannachse **14** geht mit einer beschriebenen Verlagerung der Nabenachse **15** und einer entsprechenden Verlagerung des zweiten Hauptrades **5** einher. Diese Konstruktion erlaubt es, das Raupenband **6** zu spannen, indem die Nabenachse **15** und mithin das zweite Hauptrad **5** so weit in eine von dem ersten Hauptrad **4** abgewandte Richtung "nach vorne" gedrückt werden, bis eine gewünschte Spannung des Raupenbandes **6** erreicht ist.

Da die Schwinge **13** unmittelbar an dem Übersetzungselement **11** gelagert ist, das um die Spurstellachse **8** verschwenkbar ist, bewirkt die Verschwenkung des Übersetzungselements **11** infolge der Betätigung mittels der Betätigungsmittel **9, 10** eine entsprechende Verschwenkung des zweiten Hauptrades **5,** das über die Naben **12** an der Schwinge **13** gelagert ist. Entsprechend ist der Verstellmechanismus **7** mit seinen Betätigungsmitteln **9, 10** sowie dem Übersetzungselement **11** dazu geeignet, die Spur des Raupenbandes **6** zu korrigieren.

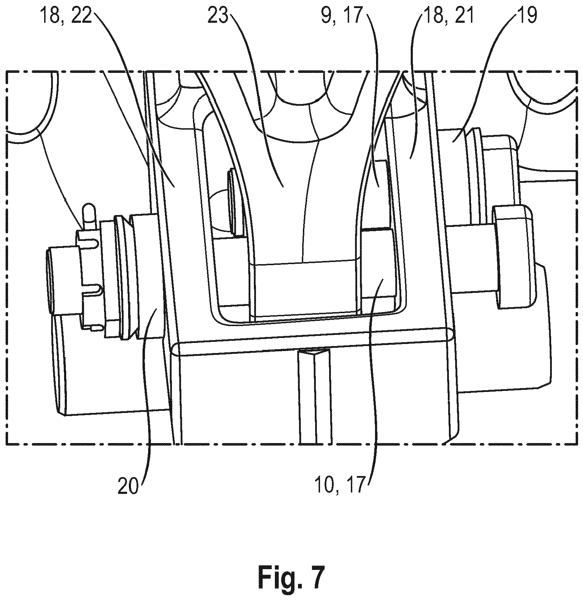

In besonders bevorzugter Weise umfasst der Verstellmechanismus **7** zwei Gegenlager **19, 20,** von denen jeweils eines einem der Betätigungsmittel **9, 10** zugeordnet ist. Die Gegenlager **19, 20** dienen dazu, den Betätigungsabschnitt **23** des Übersetzungselements **11** (und mithin das Übersetzungselement **11** insgesamt) relativ zu dem Tragelement **34** zu arretieren, sodass eine unbeabsichtigte Verschwenkung des zweiten Hauptrades **5** um die Spurstellachse **8** unterbunden ist. Wie sich besonders gut anhand von **Figur 7** ergibt, umfasst das Raupenlaufwerk **1** ein Rahmenteil **18,** das zwei einander gegenüberliegend angeordnete Wangen **21, 22** umfasst. In einem von diesen beiden Wangen **21, 22** begrenzten Zwischenraum ist der Betätigungsabschnitt **23** des Übersetzungselements **11** gelagert. Die Gewindebolzen **17** der Betätigungsmittel **9, 10** wirken mit dem Rahmenteil **18** sowie dem Betätigungsabschnitt **23** zusammen. Hierbei wirkt das erste Betätigungsmittel **9** mit dem ersten Gegenlager **19** zusammen, das an der ersten Wange **21** des Rahmenteils **18** ausgebildet ist. Das Gegenlager **19** dient dazu, den Betätigungsabschnitt **23** an einer Bewegung in eine erste Richtung tangential bezogen auf die Spurstellachse **8** bzw. parallel zu einer Wirkungsachse des Betätigungsmittels **9** zu hindern. Entsprechend wirkt das zweite Betätigungsmittel **10** mit dem zweiten Gegenlager **20** zusammen, das an der zweiten Wange **22** des Rahmenteils **18** ausgebildet ist. Das zweite Gegenlager **20** dient dazu, eine Bewegung des Betätigungsabschnitts **23** in die der ersten Richtung entgegengesetzte zweite Richtung tangential bezogen auf die Spurstellachse **8** zu unterbinden.

Für eine beabsichtigte Verschwenkung des Übersetzungselements **11** um die Spurstellachse **8** sind zunächst beide Betätigungsmittel **9, 10** derart zu betätigen, dass ihre Verspannung mit den Gegenlagern **19, 20** aufgelöst wird. Daraufhin kann der Betätigungsabschnitt **23** mittels der Betätigungsmittel **9, 10** bewegt werden, wodurch sich die vorstehend beschriebene rotatorische Bewegung des Übersetzungselements **11** um die Spurstellachse **8** ergibt. Sobald das Übersetzungselement **11** eine gewünschte Position eingenommen hat, werden die Betätigungsmittel **9, 10** gegen die Gegenlager **19, 20** verspannt und das Übersetzungselement **11** hierdurch arretiert. Die beiden Gegenlager **19, 20** sind in dem gezeigten Beispiel jeweils an dem Betätigungsabschnitt **23** abgewandten Seiten der Wangen **21, 22** ausgebildet.

In besonders bevorzugter Weise umfasst das gezeigte Raupenlaufwerk **1** eine Einstelleinrichtung **24,** mittels der der Verstellmechanismus **7** automatisch betreibbar ist. Hierzu umfasst die Einstelleinrichtung **24** zwei Aktoren **25,** die unter Zwischenschaltung eines Getriebes **32** mit den Betätigungsmittel **9, 10** zusammenwirken. Hierbei ist jeweils einer der Aktoren **25** einem der Betätigungsmittel **9, 10** zugeordnet. Die Einstelleinrichtung **24** umfasst ferner eine Steuerung **26** sowie eine Batterie **35,** mittels der die Steuerung **26** sowie die Aktoren **25** jeweils mit elektrischem Strom versorgbar sind. Die Steuerung **26** ist mit den Aktoren **25** verbunden, sodass die Aktoren **25** mittels der Steuerung **26** angesteuert werden können.

Die Einstelleinrichtung **24** umfasst des Weiteren in dem gezeigten Beispiel eine Sensoreinrichtung **27,** die zumindest zwei Temperatursensoren **28** umfasst. Jeweils einer der Temperatursensoren **28** wirkt hier mit einem Führungselement **29, 30** zusammen, die gemeinsam ein Führungselementpaar bilden. Hierdurch sind die Führungselemente **29, 30** dazu geeignet, das Raupenband **6** zumindest an einer Führungsstelle **31** seitlich zu führen. In dem gezeigten Beispiel umfasst das Raupenband **6** einen Führungsblock **33,** der in einem Mittelbereich des Raupenbands **6** ausgebildet ist. Die beiden Führungselemente **29, 30** des Führungselementpaares sind einander gegenüberliegenden Seiten des Führungsblocks **33** zugeordnet.

Eine zu korrigierende Einstellung der Spur des Raupenband **6** würde sich darin äußern, dass das Raupenband **6** mittels der Führungselemente **29, 30** (bzw. mindestens eines der Führungselemente **29, 30**) seitlich geführt werden muss. Mit anderen Worten würde der Führungsblock **33** an einer seiner seitlichen Flächen mit einem jeweiligen Führungselement **29, 30** anstoßen und an diesem entlang reiben. Diese mechanische Reibung wird teilweise in Wärme umgewandelt, die sodann mittels des jeweiligen Temperatursensors **28** der Sensoreinrichtung **27** erfasst werden kann. Die Sensoreinrichtung **27** ist in Daten übertragender Weise mit der Steuerung **26** verbunden, sodass Informationen betreffend eine Temperatur an den Führungselementen **29, 30** an die Steuerung **26** übermittelt werden. Diese Informationen können mit der Steuerung **26** nunmehr verarbeitet werden, wodurch ist der Steuerung **26** möglich ist, einen Steuerbefehl zu erzeugen und an die Aktoren **25** abzusetzen, der zu einem Betrieb des Verstellmechanismus **7** und mithin einer Verschwenkung des zweiten Hauptrades **5** um die Spurstellachse **8** führt. Dies erfolgt mit dem Ziel, die Reibung des Führungsblocks **23** an den Führungselementen **29, 30** zu reduzieren, vorzugsweise vollständig abzustellen. Eine entsprechende Veränderung wird mittels einer Veränderung der Temperatur an den Führungselementen **29, 30** registriert. Auf diese Weise ist der vorstehend beschriebene Regelkreis geschaffen, der die automatische Korrektur der Spur des Raupenbandes **6** erlaubt.

### Bezugszeichenliste

- |: Raupenlaufwerk
- |: Arbeitsmaschine
- |: Längsrichtung
- |: Haupträder
- |: Haupträder
- |: Raupenband
- |: Verstellmechanismus
- |: Spurstellachse
- |: Betätigungsmittel
- |: Betätigungsmittel
- |: Übersetzungselement
- |: Nabe
- |: Schwinge
- |: Spannachse
- |: Nabenachse
- |: Bandspannzylinder
- |: Gewindebolzen
- |: Rahmenteil
- |: Gegenlager
- |: Gegenlager
- |: Wange
- |: Wange
- |: Betätigungsabschnitt
- |: Einstelleinrichtung
- |: Aktor
- |: Steuerung
- |: Sensoreinrichtung
- |: Temperatursensor
- |: Führungselement
- |: Führungselement
- |: Führungsstelle
- |: Getriebe
- |: Führungsblock
- |: Tragelement
- |: Batterie

## Patentansprüche

1. Raupenlaufwerk (1) für eine landwirtschaftliche Arbeitsmaschine (2), umfassend
- zwei in Längsrichtung (3) des Raupenlaufwerks (1) hintereinander sowie einander gegenüberliegende Haupträder (4, 5),
- mindestens ein die Haupträder (4, 5) umspannendes, endloses Raupenband (6),
- einen Verstellmechanismus (7) zur Einstellung einer Spur des Raupenbandes (6),
wobei mindestens ein erstes Hauptrad (4) als Antriebsrad ausgebildet ist und derart mit dem Raupenband (6) zusammenwirkt, dass ein auf erste Hauptrad (4) übertragenes Drehmoment auf das Raupenband (6) übertragbar und das Raupenband (6) auf diese Weise um die Haupträder (4, 5) umlaufend antreibbar ist,
wobei der Verstellmechanismus (7) derart mit dem zweiten Hauptrad (5) zusammenwirkt, dass eine Winkelstellung des zweiten Hauptrads (5) bezogen eine vertikale Spurstellachse (8) veränderbar ist,
**dadurch gekennzeichnet, dass**
der Verstellmechanismus (7) mindestens ein Betätigungsmittel (9, 10) umfasst, mittels dessen mittelbar oder unmittelbar die Winkelstellung des zweiten Hauptrads (5) veränderbar ist,
wobei das Betätigungsmittel (9) derart angeordnet ist, dass es von einer Längsseite des Raupenlaufwerks (1) betätigbar ist.

2. Raupenlaufwerk (1) nach Anspruch 1, **dadurch gekennzeichnet, dass** der Verstellmechanismus (7) ein Übersetzungselement (11) umfasst, mittels dessen eine lineare Bewegung des mindestens einen Betätigungsmittels (9) in eine Schwenkbewegung des zweiten Hauptrads (5) um die Spurstellachse (8) übersetzbar ist.

3. Raupenlaufwerk (1) nach Anspruch 2, **dadurch gekennzeichnet, dass** mindestens eine Nabe (12) des zweiten Hauptrads (5) mittelbar oder unmittelbar an dem Übersetzungselement (11) gelagert ist.

4. Raupenlaufwerk (1) nach Anspruch 3, **dadurch gekennzeichnet, dass** die Nabe (12) an einer Schwinge (13) ausgebildet ist, die an dem Übersetzungselement (11) gelagert ist, wobei die Schwinge (13) um eine zu der Spurstellachse (8) senkrechte Spannachse (14) relativ zu dem Übersetzungselement (11) verschwenkbar ist und wobei eine Nabenachse (15) der Nabe (12) parallel zu der Spannachse (14) orientiert sowie in einem Abstand von der Spannachse (14) angeordnet ist.

5. Raupenlaufwerk (1) nach Anspruch 4, **dadurch gekennzeichnet, dass** die Schwinge (13) mit einem Bandspannzylinder (16) zusammenwirkt, mittels dessen eine Spannkraft auf die die Schwinge (13) ausübbar ist, sodass die Schwinge (13) entgegen einer von dem Raupenband (6) ausgeübten Gegenkraft um die Spannachse (14) verschwenkbar und das Raupenband (6) auf diese Weise spannbar ist.

6. Raupenlaufwerk (1) nach einem der vorhergehenden Ansprüche, **dadurch gekennzeichnet, dass** der Verstellmechanismus (7) mindestens zwei, vorzugsweise genau zwei, Betätigungsmittel (9, 10) aufweist, wobei sämtliche Betätigungsmittel (9, 10) von derselben Längsseite des Raupenlaufwerks (1) betätigbar angeordnet sind.

7. Raupenlaufwerk (1) nach einem der Ansprüche 2 bis 5, jeweils in Kombination mit Anspruch 6, **dadurch gekennzeichnet, dass** die Betätigungsmittel (9, 10) jeweils einen Gewindebolzen (17) umfassen, deren jeweiliges Außengewinde mit einem jeweiligen Innengewinde des Übersetzungselements (11) korrespondierenden.

8. Raupenlaufwerk (1) nach einem der Ansprüche 6 oder 7, **dadurch gekennzeichnet, dass** an einem feststehenden Rahmenteil (18) für die Betätigungsmittel (9, 10) jeweils ein Gegenlager (19, 20) ausgebildet ist, wobei die Betätigungsmittel (9, 10) gegen die Gegenlager (19, 20) verspannbar und hierdurch das Übersetzungselement (11) in einander entgegengesetzte Richtungen tangential zu der Spurstellachse (8) arretierbar sind.

9. Raupenlaufwerk (1) nach Anspruch 8, **dadurch gekennzeichnet, dass** das Rahmenteil (18) zwei gegenüberliegende Wangen (21, 22) aufweist, zwischen denen ein Betätigungsabschnitt (23) des Übersetzungselements (11) angeordnet ist, wobei das erste Gegenlager (19) an einer ersten Wange (21) ausgebildet ist, die der Längsseite des Raupenlaufwerks (1) zugeordnet ist, von der aus die Betätigungsmittel (9, 10) betätigbar sind, und das zweite Gegenlager (20) an der zweiten Wange (22) ausgebildet ist.

10. Raupenlaufwerk (1) nach einem der vorhergehenden Ansprüche, **gekennzeichnet durch** eine Einstelleinrichtung (24), die mit dem Verstellmechanismus (7) zusammenwirkt, wobei mittels der Einstelleinrichtung (24) der Verstellmechanismus (7) automatisch dahingehend betreibbar ist, dass die Spur des Raupenbandes (6) korrigiert wird.

11. Raupenlaufwerk (1) nach Anspruch 10, **dadurch gekennzeichnet, dass** die Einstelleinrichtung (24) mindestens einen Aktor (25) und eine Steuerung (26) zur automatischen Ansteuerung des Aktors (25) aufweist, wobei der Aktor (25) derart mit dem Verstellmechanismus (7) zusammenwirkt, dass mittels des Aktors (25) das mindestens eine Betätigungsmittel (9, 10) betätigbar ist.

12. Raupenlaufwerk (1) nach Anspruch 11, **gekennzeichnet durch** mindestens eine Sensoreinrichtung (27), die in Daten übertragender Weise mit der Steuerung (26) verbunden ist, sodass mittels der Sensoreinrichtung (27) erfasste Informationen an die Steuerung (26) leitbar und mittels der Steuerung (26) verarbeitbar ist, wobei die Steuerung (26) dazu eingerichtet ist, den Aktor (25) in Abhängigkeit von den von der Sensoreinrichtung (26) erfassten Informationen anzusteuern.

13. Raupenlaufwerk (1) nach Anspruch 12, **dadurch gekennzeichnet, dass** die Sensoreinrichtung (27) mindestens einen Temperatursensor (28) umfasst, mittels dessen eine Temperatur an einer Führungsstelle (31) erfassbar ist, an der das Raupenband (6) seitlich geführt ist.

14. Raupenlaufwerk (1) nach Anspruch 13, **dadurch gekennzeichnet, dass** die Sensoreinrichtung (27) mindestens zwei Temperatursensoren (28) aufweist, von denen jeweils einer einem Führungselement (29, 30) zugeordnet ist, wobei die Führungselemente (29, 30) gemeinsam eine Führungselementpaar bilden, das dazu eingerichtet ist, das Raupenband (6) an der Führungsstelle (31) beidseitig zu führen.
